# EUROPEAN PATENT APPLICATION

(11) **EP 1 063 464 A1**
(43) Date of publication of application: **27.12.2000**
(21) Application number: 99500107.0
(22) Date of filing: 23.06.1999
(51) Int. Cl.: F16L 59/02, H02G 15/18

(54) **Insulating sleeve for cables or pipes**

(71) Applicant: Gergonne GPI Espagne, S.L., 08740 Sant Adnreu de la Barca (ES)
(72) Inventor: Raventos Gallofre, Juan, 08740 Sant Andreu de la Barca (ES)
(74) Representative: Marques Alos, Fernando

(57) **Abstract**

**"INSULATING PROTECTIVE COVERING FOR WIRING SYSTEMS AND PIPES"**, destined principally to the automotive sector, applicable also to domestic electrical appliances such as washing machines, air conditioners, refrigerators, etc., made from a flexible sheet of polyurethane or similar material (1) characterised by presenting on both borders of one of its faces fixing ships of a velcro type material, one of these presenting random surface filaments (2) and the other a battery of semi-rigid surface filaments (3) arranged in two alignments inversely inclined, which grip firmly the random filaments of the first strip; the cables or pipes to be protected being laid on the flat surface of the polyurethane (1) and this being closed by pressure of one fixing strip over the other, being able optionally to locate these fixing strips (2) and (3) on the lateral edges of the flexible sheet (1), or even to locate them on opposite faces.

## Description

The purpose of the present invention, as is expressed in the summary of this descriptive memorandum, consists of an "**INSULATING PROTECTIVE COVERING FOR WIRING SYSTEMS AND PIPES**", destined principally to the automotive sector, applicable also to domestic electrical appliances such as washing machines, air conditioners, refrigerators, etc.

At present these sectors use for their mechanisms wiring and conduit piping which often has to incorporate protective coverings, the fundamental purpose of which is to avoid vibrations and/or wear and tear through friction against other parts in the case of cables, and to protect them thermically, in the case of both cables and piping, acting as insulating protection and against fire.

For this reason, it has been chosen to use a fire-proof polyurethane insulating material as a protective element, which covers the whole of the conductor element to be protected.

These flexible protectors of polyurethane sheet are arranged around the wiring system, being subsequently stuck together with an adhesive glue also fire-proof.

The principal problem presented is that in certain conditions the aforementioned glue often comes unstuck, leaving the cable or pipe vulnerable, with the consequent problems which this can cause.

This is principally because the fireproofing additive which is applied to the glues is inversely proportional to the adhesive strength of the glue.

The novel insulating protector for the covering of wiring systems and pipes is made from a flexible sheet of polyurethane or similar material characterised by presenting on both borders of one of its faces fixing strips of a velcro type material, one of these presenting random surface filaments and the other a battery of semi-rigid surface filaments arranged in two alignments inversely inclined, which grip firmly the random filaments of the first strip.

Optionally, these fixing strips can be located on the lateral edges of the flexible sheet, or even located on opposite faces.

The cables or pipes to be protected are laid on the flat surface of the polyurethane sheet and this is closed through pressure of one fixing strip over the other.

One of the advantages of this novel insulating protector is based on the saving of time when installing the wiring system or piping.

This is especially so since, on many occasions, the route of the conduits has to be changed, this being a very cumbersome and slow task when using protectors fastened with glue, requiring high consumption of glue and time for rectification.

In these novel protectors, the assembly and dismantling of them is very simple, rapid and clean.

At the same time, it achieves a reduction in the size of the protective piece.

### DESCRIPTION OF THE DRAWINGS

In order to illustrate what is explained above, attached to this present descriptive memorandum, and forming an integral part of it, is a sheet of drawings representing in a simplified sketch an example of the application, merely illustrative but not limiting, of the practical uses of the invention.

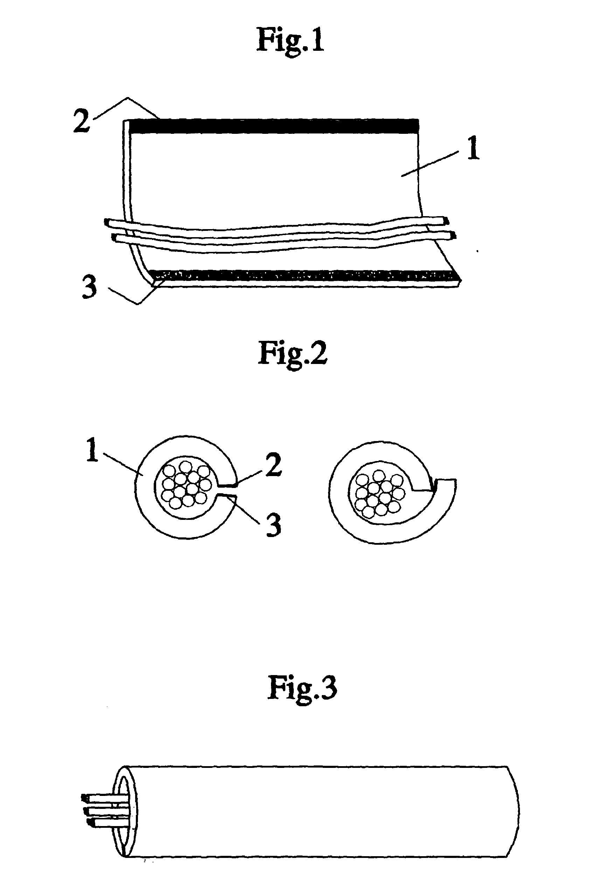

In these drawings: Figure 1 relates to a view of the novel cable protector with the velcro strips readily observable.
Figure 2 shows the different possibilities of joining the velcro together.
Figure 3 is a view showing the cables passing through the protector.

### DESCRIPTION OF A PRACTICAL CASE

The insulating protector for covering wiring systems and pipes is made from a flexible sheet of polyurethane or similar material (1) characterised by presenting on both borders of one of its faces fixing strips of a velcro type material, one of these presenting random surface filaments (2) and the other a battery of semi-rigid surface filaments (3) arranged in two alignments inversely inclined, which grip firmly the random filaments of the first strip.

Optionally, these fixing strips (2) and (3) can be located on the lateral edges of the flexible sheet (1), or even located on opposite faces.

The cables or pipes to be protected are laid on the surface of the polyurethane sheet (1) and this is closed through pressure of one fixing strip over the other.

Having established the concept as expressed, hereunder follows the note of claims, summarising thus the new art which it is desired to claim.

## Claims

1. **"INSULATING PROTECTIVE COVERING FOR WIRING SYSTEMS AND PIPES"**, destined principally to the automotive sector, applicable also to domestic electrical appliances such as washing machines, air conditioners, refrigerators, etc., made from a flexible sheet of polyurethane or similar material (1) characterised by presenting on both borders of one of its faces fixing strips of a velcro type material, one of these presenting random surface filaments (2) and the other a battery of semi-rigid surface filaments (3) arranged in two alignments inversely inclined which grip firmly the random filaments of the first strip.

2. **"INSULATING PROTECTIVE COVERING FOR WIRING SYSTEMS AND PIPES"**, according to the above claim, characterised because optionally the fixing strips (2) and (3) can be located on the lateral edges of the flexible sheet (1) or even located on opposite faces.

3. **"INSULATING PROTECTIVE COVERING FOR WIRING SYSTEMS AND PIPES"**, according to claim 1, characterised because, for the protection of the cable, it is only necessary to arrange the cables or pipes on the polyurethane sheet (1) and close it together through the pressure of one fixing strip over the other.
